# EUROPEAN PATENT SPECIFICATION

(11) **EP 0 353 322 B1**
(45) Date of publication and mention of the grant of the patent: **24.11.1993**
(21) Application number: 88112566.0
(22) Date of filing: 02.08.1988
(51) Int. Cl.: C03B 7/16

(54) **A system for distributing small quantities of glass into suitable moulds for the production of glass product**
Vorrichtung zum Verteilen kleiner Glasmengen in Formen zum Herstellen von Glasgegenständen
Système pour distribuer de petites quantités de verre dans un moule afin de produire des produits en verre

(43) Date of publication of application: 07.02.1990
(73) Proprietor: BOTTERO S.p.A., I-12010 Roata Canale (Cuneo) (IT)
(72) Inventor: Ghinamo, Leonardo, I-12012 Boves (IT)
(74) Representative: Jorio, Paolo

(56) References cited:
- EP-A- 0 202 116
- US-A- 3 721 544
- US-A- 3 871 858

## Description

The present invention relates to a system for distributing small quantities of molten glass into suitable moulds for the production of glass products.

Present systems of the above-indicated type essentially comprise a distributor element having a funnel-shape upper part, a toothed central part meshing with a rack, and a bent lower part able to distribute small quantities of molten glass into the moulds. The distributor element can rotate, under the action of the rack, about the axis of its central part in such a way that the lower part can distribute small quantities of molten glass in a predetermined sequence into moulds positioned along the arc of the circle described by the end of the lower part. The rack is installed within an arm supported by a frame which further supports an electric motor which, by means of a series of cams, controls the rotation of a cam lever. A profile of this latter cooperates with one end of the rack and causes axial translation of this. The sequence of distribution of the small quantities of molten glass is determined by the succession of displacements of the cam lever controlled by the electric motor.

Systems such as that described above have several disadvantages.

In particular, in such systems, when it is desired to vary the sequence of distribution of the small quantities of molten glass it is necessary to install a different cam lever designed in such a way that the new distribution sequence corresponds to its succession of displacements controlled by the electric motor. The operator must, therefore, with all the costs which this involves, have available a plurality of interchangeable cam levers one for each distribution sequence which it is possible to select. Moreover, given the constructional complexity of the transmission mechanism from the electric motor to the rack, the replacement of the cam lever is not easily achieved.

From EP-A-0202116 is known a system of the aforementioned type in which for controlling the rack by means of the motor a cam lever is not used. Anyway, such a system also presents numerous drawbacks such as a complex and expensive construction, and moreover, a large bulk, specially in the horizontal plane and a certain difficulty in disassembling the device controlling the displacement of the distributor for servicing the system.

The object of the present invention is that of providing a system for the distribution of small quantities of molten glass into suitable moulds for the production of glass products, which will be free from the stated disadvantages and which, therefore, will be flexible in such a way that it is possible to deliver quantities of molten glass in different distribution sequences with the same mechanism.

Further objects and advantages will be described in the course of the following description.

According to the present invention there is provided a system for distributing quantities of molten glass into appropriate moulds as defined in claim 1.

For a better understanding of the present invention several preferred embodiments are now described purely by way of non-limitative example, with reference to the attached drawings, in which:
Figure 1 is a partially sectioned plan view of a first embodiment of the system of the invention;
Figure 2 is a section on an enlarged scale taken on the line IV-IV of Figure 1;
Figure 3 is a partially sectioned plan view of a second embodiment of the system of the invention;
Figure 4 is a section taken on the line VI-VI of Figure 3; and
Figure 5 is a partially sectioned plan view of a third embodiment of the system of the invention.

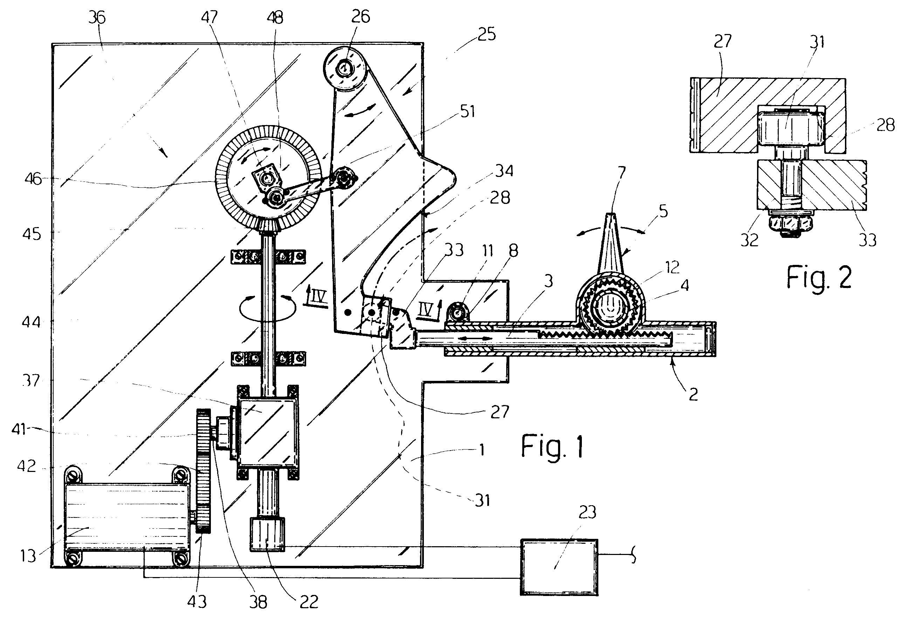

As illustrated in Figures 1 and 2 the system of the invention comprises a frame 1 which supports a hollow arm 2 within which is installed an axially translatable rack 3 a toothed portion of which meshes with a central toothed portion 4 of a rotary distributor 5. This has a funnel shaped upper portion (not shown) and a lower portion 7 bent with respect to the axis of the portion 4 and adapted to channel quantities of molten glass in a predetermined sequence to a plurality of moulds of known type positioned beneath the end of the portion 7 along the arc of the circle described by this end during rotation of the distributor 5. The quantities of molten glass are introduced into the distributor 5 from an appropriate feeder which is not shown since it is of known type and naturally disposed above the funnel shaped upper portion. From one end of the arm 2 extends a lug 8 pivoted to a vertical pin 11 carried by the frame 1. The arm 2 can therefore rotate about the pin 11 between a working position illustrated in the Figure and a retracted position which allows access to the feeder device. Rotation of the arm 2 takes place in a known manner by the action of a pneumatic or hydraulic piston, not illustrated for simplicity. This rotation takes places automatically in the event of incorrect operation or breakdown of the system. The central portion 4 of the distributor 5 is housed in a semi-cylindrical seat 12 formed in a side wall of the arm 2.

The part of the system described so far is also found in the other embodiments illustrated in the attached drawings. For this reason the reference numerals for such parts will be the same for all the embodiments of the system.

In all three embodiments of the system of the invention a motor 13 is connected to the rack 3 by means of a respective transmission mechanism including a cam lever 25. This has a first end pivoted to a vertical pin 26 carried by the frame 1 and a second end from which a tongue 27 extends co-planarly (Figure 2) which has a U-shaped slot 28 formed on the face directed towards the frame 1. This slot 28 is engaged by a roller 31 freely rotatably mounted on a vertical pin 32 carried by a flat tongue 33 extending from the end of the rack 3 projecting from the arm 2. The lever 25 has along its perimetral edge facing the distributor 5, and which starts close to the said second end, a curved profile 34 adapted to cooperate with the roller 31 (according to the broken outline arrow) during rotation of the arm 2 in the first mentioned cases.

Between the motor 13 and the lever 25, as already described, each embodiment illustrated in Figures 1, 3 and 5 has a different mechanism for transmitting motion which in each case causes a reduced rotation of the lever 25 about the pin 26. Rotation of the lever 25 causes a corresponding axial translation of the rack 3 and therefore, by means of this, an amplified rotation of the distributor 5. The amplification ratio between the rotation of the lever 25 and of the distributor 5 is a function of the diameter and therefore of the number of teeth formed on the central portion 4 of the distributor 5.

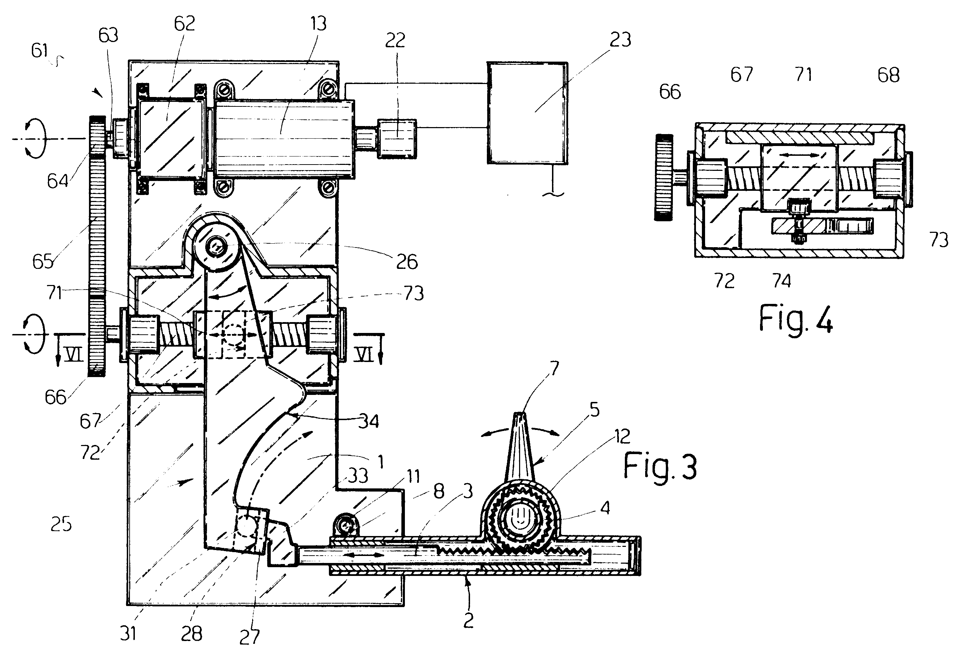

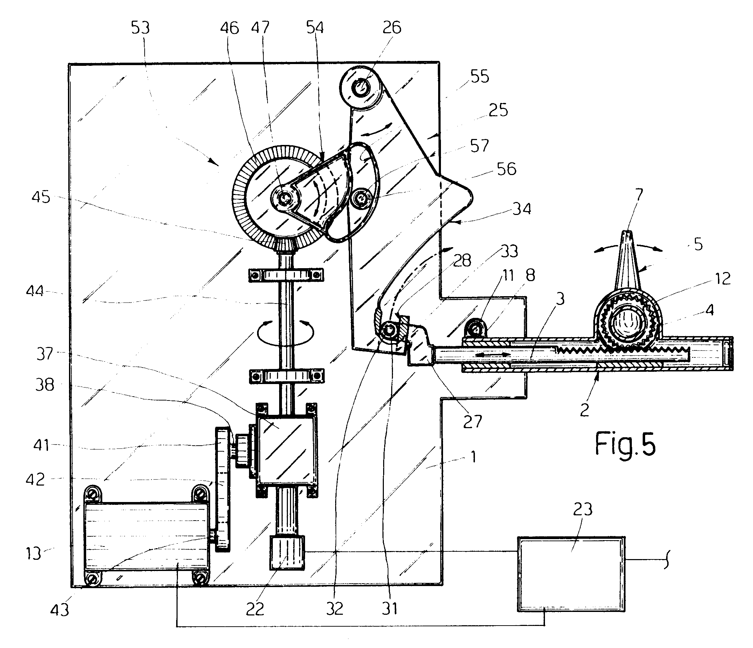

As illustrated in Figure 1, a transmission mechanism generally indicated 36 is mounted between the stepping motor 13 and the lever 25. The mechanism 36 includes a reduction gear box 37 having a first output shaft 38 on which is fitted a first toothed wheel 41 meshing, by means of a second toothed wheel 42, with a third toothed wheel 43 fitted on the output shaft of the stepping motor 13. The reduction gear box 37 includes a second output shaft 44 orthogonal to the first and having at one end a toothed bevel gear 45 meshing with a toothed bevel gear 46 the hub 47 of which is supported by the frame 1. On the hub 47 there is fitted a crank 48 coupled to a connecting rod 51 one end of which is pivoted to a central part of the lever 25. Also mounted on the shaft 44 is the position sensor 22 connected to the central processor 23 to which the stepping motor 13 is also connected. For simplicity in Figure 1, as also in Figures 3 and 5, the feeder has not been illustrated.

In Figure 5 the reference numeral 53 indicates a transmission mechanism similar to the mechanism 36 and therefore indicated with the same reference numerals. The single difference lies in the fact that in place of the crank and connecting rod mechanism the mechanism 53 has a rotating element 54 keyed to the hub 47 and including a slot 55 with a curvilinear longitudinal axis within which is housed a roller 56 freely rotatable on a vertical pin 57 carried by the lever 25.

As illustrated in Figure 3 a transmission mechanism generally indicated 61 comprises a reduction gear box 62 mounted on the output shaft of the stepping motor 13 on which the sensor 22 is also mounted. The reduction gear box 62 has an output shaft 63 on which is keyed a first toothed wheel 64 meshing, by means of a second toothed wheel 65, with a third toothed wheel 66 keyed onto one end of a worm screw 67 installed within a seat 68 formed in the frame 1. Along the worm screw 67 an internally threaded sleeve 71 is translatable, which externally has a U-shape slot 72 engaged by a roller 73 freely rotatably mounted (Figure 4) on a vertical pin 74 carried by an intermediate portion of the lever 25.

As already described the distributor 5 rotates according to a predetermined sequence set into the central processor 23 and performs several stops at each of which it channels a small quantity of molten glass into the underlying mould. In fact, at each stop the central processor 23 controls the feeder which allows a small quantity of molten glass to fall into the distributor 5. The rotation of the distributor 5 is determined by the axial translation of the rack 3 which receives motion from the stepping motor 13 by means of a transmission mechanism 36, 53 or 61. The stepping motor 13 is supplied from the central processor 23 which, via its connection with the sensor 22, indirectly controls the displacements of the distributor 5. The operation of the distribution mechanisms 36, 51 and 61 are not described because they are simple to understand.

From what has been described above the advantages achieved with the embodiment of the present invention will be evident.

In particular, in the systems described above it is possible to set several sequences for the distribution of small quantities of molten glass without having to replace any components of the transmission mechanism each time. The systems are thus particularly flexible therefore favouring any requirements of the user as far as the sequence of distribution is concerned which, it will be recalled, are varied by variation in the number, disposition and size of the moulds. Therefore, by exploiting the characteristics of the stepping motor it is possible to make the transmission mechanism of the system simple in construction and independent of the distribution sequence. Finally, the above described systems have several identical components even if they are combined and positioned in a different manner. This makes it possible to produce systems of different configuration utilising a certain number of similar components, with all the advantages which derive therefrom as far as production costs are concerned.

In particular, the position sensor 22 can be fitted to the output shaft of the stepping motor or to the output shaft of the reduction gear box. In place of the sensor 22 the sensor can be provided with a different sensor which can be fitted to the rack 3 or on the arm 2 and adapted to detect the translation of the rack 3.

Finally, it is to be noted that on the same system there can be installed several distributors 5 caused to rotate in use by the same rack.

## Claims

1. A system for the distribution of small quantities of molten glass into appropriate moulds for the production of glass products, the system comprising: a support frame (1); a hollow arm (2) pivotally mounted on a vertical pin (11) on said support frame (1) for pivoting movement from an operating position into an inoperative position; a rotating distributor (5) carried by said hollow arm (2) and adapted to receive small quantities of molten glass from a feeder and to channel these in a predetermined distribution sequence via a bent lower portion (7) to a plurality of underlying moulds; means for rotating said distributor (5) with respect to said hollow arm (2), said means comprising a central toothed portion of the distributor (2) meshed with a respective toothed portion of an axially translatable rack (3) housed inside the hollow arm (2); a servomotor (13) controlled by an electronic central processor (23); and a transmission mechanism (36,53,61) for transmitting motion between an output shaft of the servomotor (13) and the axially traslatable rack (3); **characterized** in that said transmission mechanism (36,53,61) comprises a cam lever (25) pivoted at a first end to a second vertical pin (26) carried by said frame (1) and having a second end engaged with an end of said rack (3) extending outwards from said hollow arm (2); in that said motor (13) is a stepping motor and is carried in a fixed position by said frame (1); in that said engagement between said second end of said cam lever (25) and said end of said rack (3) is realized via a first tongue (27) provided on said second end of the cam lever (25) and via a roller (31) freely housed inside a slot (28) provided through said first tongue (27) and freely rotatably mounted on a pin (32) carried by a second tongue (33) extending from said end of said rack (3); and in that said roller (31) is able to cooperate with a curved profile of a perimetral edge portion (34) of said cam lever (25) when said arm (2) rotates about said first pin (11).

2. A system according to Claim 1, characterized in that it includes a position sensor (22) mounted on the output shaft of the stepping motor (13) and adapted to detect the angular position of the latter and to indicate this position to said central processor (23).

3. A system according to Claim 1, characterised by the fact that it includes a position sensor (22) mounted on a movable component of the said transmission mechanism (36) and adapted to detect the angular position of this component which is dependent on that of the output shaft of the said stepping motor (13) and to indicate this position to the said central processor (23).

4. A system according to Claim 1, characterised by the fact that it includes a position sensor (22) adapted to detect the axial position of the said rack (3) dependent on the angular position of the output shaft of the said stepping motor (13) and to indicate this position to the said central processor (23).

5. A system according to any preceding Claim, characterised by the fact that the said hollow arm (2) comprises a semi-cylindrical seat (12) in which a central portion (4) of the said distributor (5) is having said toothed portion is housed; the distributor further including an upper, preferably funnel shaped portion.

6. A system according to Claim 1, characterised by the fact that the said transmission mechanism (36) includes a reduction gear box (37) connected to the output shaft of the said stepping motor (13) and having an output shaft (44) on which is fitted a first bevel gear (45) meshing with a second bevel gear (46) on the hub (47) of which is keyed a crank (48) coupled to a connecting rod (51) one end of which is pivoted to an intermediate portion of the said lever (25).

7. A system according to Claim 1, characterised by the fact that the said transmission mechanism (53) includes a reduction gear box (37) connected to the output shaft of the said stepping motor (13) and having an output shaft (44) on which is fitted a first bevel gear (45) meshing with a second bevel gear (46) to the hub (47) of which is fitted a rotating member (54) having a slot (55) with a curvilinear longitudinal axis within which is housed a roller (56) freely rotatably mounted on a pin (57) carried by the Said lever (25).

8. A system according to Claim 1, characterised by the fact that the said transmission mechanism (61) includes a worm screw (67) driven by the stepping motor (13) and along which is translatable an internally threaded sleeve (71) externally provided with a slot (72) in which is housed a roller (73) freely rotatably mounted on a pin (74) carried by an intermediate portion of the said lever (25).

## Patentansprüche

1. Vorrichtung zum Verteilen kleiner geschmolzener Glasmengen in Formen zum Herstellen von Glasgegenständen, mit: einem Stützrahmen (1), einem hohlen Arm (2), der an einem vertikalen Stift (11) auf dem besagten Stützrahmen (1) zur verschwenkenden Bewegung von einer Arbeitsposition in eine Ruheposition verschwenkbar angelenkt ist, mit einem sich drehenden Verteilerelement (5), das von dem hohlen Arm (2) getragen wird und dazu vorgesehen ist, kleine Mengen an geschmolzenem Glas von einem Zuführelement zu erhalten und diese in einer vorbestimmten Verteilungsabfolge über einen gebogenen unteren Abschnitt (7) an eine Vielzahl von unterliegenden Formen zu leiten, mit Mitteln zur Drehung des Verteilerelementes (5) in Bezug auf den hohlen Arm (2), wobei diese Mittel einen mittigen gezahnten Abschnitt des Verteilerelementes (5) aufweisen, der mit einem entsprechend gezahnten Abschnitt einer axial verschieblichen Zahnstange (3) in Eingriff steht, die innerhalb des hohlen Arms (2) geführt ist, mit einem Stellmotor (13), der von einer elektronischen Steuereinheit (23) gesteuert wird, und mit einer Übertragungseinrichtung (36, 53, 61) zur Übertragung der Bewegung zwischen der Ausgangswelle des Stellmotors (13) und der axial verschieblichen Zahnstange (3), **dadurch gekennzeichnet**, daß die Übertragungseinrichtung (36,53,61) einen Nockenhebel (25) umfaßt, der an einem ersten Ende an einem zweiten, von dem Rahmen (1) getragenen vertikalen Stift (26) angelenkt ist und der über ein zweites Ende verfügt, das mit einem Ende der Zahnstange (3) im Eingriff steht, die sich nach außen von dem hohlen Arm (2) weg erstreckt, daß der Motor (13) ein Schrittmotor ist und daß er in einer festen Lage von dem Rahmen (1) getragen wird, daS der Eingriff zwischen dem zweiten Ende des Nockenhebels (25) und dem genannten Ende der Zahnstange (3) über eine erste Zunge (27), die auf dem zweiten Ende des Nockenhebels (25) vorgesehen ist, und über eine Rolle (31) realisiert wird, die frei innerhalb eines Schlitzes (28) angeordnet ist, der sich durch die erste Zunge (27) hindurch erstreckt und auf einem Stift (32) frei drehbar angeordnet ist, der von einer zweiten Zunge (33) gestützt wird, die sich von dem besagten Ende der Zahnstange (3) weg erstreckt und daß die Rolle (31) geeignet ist, mit einem gekrümmten Profil eines auf dem Umkreis angeordneten Kantenabschnittes (34) des Nockenhebels (25) zusammenzuwirken, wenn der Arm (2) um den ersten Stift (11) rotiert

2. Vorrichtung nach Anspruch 1, dadurch gekennzeichnet, daß sie einen Positionssensor (22) aufweist, der auf einer Ausgangswelle des Schrittmotors (13) angeordnet ist und geeignet ist, die Winkelposition des letzteren zu erfassen und diese Lage der besagten zentralen Steuereinheit (23) mitzuteilen.

3. Vorrichtung nach Anspruch 1, dadurch gekennzeichnet, daß sie einen Positionssensor (22) umfaßt, der auf einem beweglichen Element der Übertragungseinrichtung (36) angeordnet und geeignet ist, die Winkelposition dieses Elements zu erfassen, die von der Lage der Ausgangswelle des besagten Schrittmotors (13) abhängig ist, und diese Lage der besagten zentralen Steuereinheit (23) mitzuteilen.

4. Vorrichtung nach Anspruch 1, dadurch gekennzeichnet, daß sie einen Positionssensor (22) umfaßt, der geeignet ist, die axiale Position der Zahnstange (3) in Abhängigkeit der Winkelposition der Ausgangswelle des Schrittmotors (13) zu erfassen und diese Lage der besagten zentralen Steuereinheit (23) mitzuteilen.

5. Vorrichtung nach einem der vorstehenden Ansprüche, dadurch gekennzeichnet, daß der hohle Arm (2) einen halb-zylindrischen Sitz (12) umfaßt, in dem ein mittiger Abschnitt (4) des Verteilerelementes (5) mit dem gezahnten Abschnitt eingepaßt ist, wobei das Verteilerelement weiterhin einen oberen, vorzugsweise trichterförmigen Abschnitt umfaßt

6. Vorrichtung nach Anspruch 1, dadurch gekennzeichnet, daß die Übertragungseinrichtung (36) ein Untersetzungsgetriebe (37) umfaßt, welches an der Ausgangswelle des Schrittmotors (13) angeschlossen ist und eine Ausgangswelle (44) aufweist, auf der ein erstes Kegelausgleichsgetriebe (45) angeordnet ist, welches in ein zweites Kegelausgleichsgetriebe (46) eingreift, auf dessen Nabe (47) eine Kulisse (48) mit einem Verbindungsstab (51) verbunden ist, von dem ein Ende an einem mittleren Abschnitt des Nockenhebels (25) verschwenkbar angelenkt ist

7. Vorrichtung nach Anspruch 1, dadurch gekennzeichnet, daß die Übertragungseinrichtung (53) ein Untersetzungsgetriebe (37) umfaßt, welches an der Ausgangswelle des Schrittmotors (13) angeschlossen ist und eine Ausgangswelle (44) aufweist, auf der ein erstes Kegelausgleichsgetriebe (45) angeordnet ist, welches in ein zweites Kegelausgleichsgetriebe (46) eingreift, auf dessen Nabe (47) ein drehbares Element (54) aufgesetzt ist, das einen Schlitz (55) mit einer gekrümmten Längsachse aufweist, in dem eine Rolle (56) frei drehbar auf einem Stift (57) läuft, der von dem Hebel (25) getragen ist.

8. Vorrichtung nach Anspruch 1, dadurch gekennzeichnet, daß die Übertragungseinrichtung (53) eine Schneckenschraube (67) umfaßt, die von dem Schrittmotor (13) angetrieben wird und entlang derer eine innen gewindete Hülse (71) bewegbar ist, die mit einem äußeren Schlitz (72) versehen ist, in dem eine Rolle (73) frei drehbar auf einem Stift (74) läuft, der von einem Zwischenabschnitt des besagten Hebels (25) getragen ist.

## Revendications

1. Système pour distribuer de petites quantités de verre fondu dans des moules appropriés afin de fabriquer des produits en verre, le système comprenant : un châssis de support (1); un bras creux (2) monté de manière à pivoter sur une tige verticale (11) sur ledit châssis de support (1) pour un pivotement d'une position de fonctionnement à une position de repos; un distributeur rotatif (5) supporté par ledit bras creux (2) et adapté à recevoir de petites quantités de verre fondu d'un dispositif d'alimentation et à diriger celles-ci en une séquence de distribution prédéterminée via une portion inférieure courbe (7) jusqu'à une pluralité de moules sous-jacents; un moyen pour faire tourner ledit distributeur (5) relativement audit bras creux (2), ledit moyen comprenant une portion dentée centrale du distributeur (5) engrenée avec une portion dentée respective d'une crémaillère à translation axiale (3) logée dans le bras creux (2); un servomoteur (13) commandé par un processeur central électronique (23); et un mécanisme de transmission (36,53,61) pour transmettre le mouvement entre un arbre de sortie du servomoteur (13) et la crémaillère à translation axiale (3); caractérisé en ce que ledit mécanisme de transmission (36,53,61) comprend un levier à came (25) pivotant à une première extrémité sur une seconde tige verticale (26) supportée par ledit châssis (1) et comportant une seconde extrémité engagée avec une extrémité de ladite crémaillère (3) s'étendant vers l'extérieur depuis ledit bras creux (2); en ce que ledit moteur (13) est un moteur pas à pas et est supporté dans une position fixe par ledit châssis (1); en ce que ledit engagement entre ladite seconde extrémité dudit levier à came (25) et ladite extrémité de ladite crémaillère est réalisé via une première languette (27) disposée sur ladite seconde extrémité du levier à came (25) et via un rouleau (31) reçu librement dans une fente (28) ménagée dans ladite première languette (27) et monté librement à rotation sur une tige (32) supportée par une seconde languette (33) s'étendant depuis ladite extrémité de ladite crémaillère (3); et en ce que ledit rouleau (31) est apte à coopérer avec un profil courbe d'une portion de bord de périmètre (34) dudit levier à came (25) lorsque ledit bras (2) tourne autour de ladite première tige (11).

2. Système selon la revendication 1, caractérisé en ce qu'il comprend un capteur de position (22) monté sur l'arbre de sortie du moteur pas à pas (13) et adapté à détecter la position angulaire de ce dernier et indiquer cette position audit processeur central (23).

3. Système selon la revendication 1, caractérisé en ce qu'il comprend un capteur de position (22) monté sur un élément mobile dudit mécanisme de transmission (36) et adapté à détecter la position angulaire de cet élément qui est fonction de celle de l'arbre de sortie dudit moteur pas à pas (13) et indiquer cette position audit processeur central (23).

4. Système selon la revendication 1, caractérisé en ce qu'il comprend un capteur de position (22) adapté à détecter la position angulaire de ladite crémaillère (3) en fonction de la position angulaire de l'arbre de sortie dudit moteur pas à pas (13) et indiquer cette position audit processeur central (23).

5. Système selon l'une quelconque des revendications précédentes, caractérisé en ce que ledit bras creux (2) comprend un siège semi-cylindrique (12) dans lequel une portion centrale (4) dudit distributeur (5) comportant ladite portion dentée est logée; le distributeur comprenant en outre une portion supérieure, de préférence en forme d'entonnoir.

6. Système selon la revendication 1, caractérisé en ce ledit mécanisme de transmission (36) comprend un train réducteur (37) relié à l'arbre de sortie dudit moteur pas à pas (13) et comportant un arbre de sortie (44) sur lequel est fixé un premier engrenage conique (45) s'engrenant avec un second engrenage conique (46) sur le moyeu (47) duquel est calée une manivelle (48) couplée à une bielle (51) dont une extrémité pivote sur une portion intermédiaire dudit levier (25).

7. Système selon la revendication 1, caractérisé en ce ledit mécanisme de transmission (53) comprend un train réducteur (37) relié à l'arbre de sortie dudit moteur pas à pas (13) et comportant un arbre de sortie (44) sur lequel est fixé un premier engrenage conique (45) s'engrenant avec un second engrenage conique (46) sur le moyeu (47) duquel est fixé un élément rotatif (54) comportant une fente (55) avec un axe longitudinal curviligne au sein de laquelle est logé un rouleau (56) monté librement à rotation sur une tige (57) supportée par ledit levier (25).

8. Système selon la revendication 1, caractérisé en ce ledit mécanisme de transmission (61) comprend une vis sans fin (67) entraînée par le moteur pas à pas (13) et avec laquelle peut être déplacé par translation un manchon taraudé (71) doté extérieurement d'une fente (72) dans laquelle est logée un rouleau (73) monté librement à rotation sur une tige (74) supportée par une portion intermédiaire dudit levier (25).
